Europäisches Patentamt

European Patent Office

Office européen des brevets

(11) Veröffentlichungsnummer: **0 280 934**

A2

(12) **EUROPÄISCHE PATENTANMELDUNG**

(21) Anmeldenummer: 88101902.0

(22) Anmeldetag: 10.02.88

(51) Int. Cl.⁴: **B01D 11/02** , A24B 15/24

(30) Priorität: 28.02.87 DE 3706595

(43) Veröffentlichungstag der Anmeldung:
07.09.88 Patentblatt 88/36

(84) Benannte Vertragsstaaten:
AT BE CH FR GB IT LI NL SE

(71) Anmelder: MESSER GRIESHEIM GMBH
Hanauer Landstrasse 330
D-6000 Frankfurt/Main 1(DE)

(72) Erfinder: Beutler, Hans Josef
Küfernstrasse 24
D-4156 Willich(DE)
Erfinder: Gährs, Hans Jasper, Dr.
Novalisstrasse 12
D-4000 Düsseldorf(DE)
Erfinder: Lenhard, Ulrich
Trift 42
D-4150 Krefeld(DE)
Erfinder: Lürken, Franz
Wilhelm-Stefen-Strasse 79
D-4150 Krefeld(DE)

(54) Verfahren zur Extraktion organischer Bestandteile aus Feststoffen.

(57) Bei Verfahren der Hochdruckextraktion wird ein gasförmiges Lösungsmittel unter hohem Druck durch einen mit Feststoff gefüllten Extraktor geleitet und nimmt hierbei organische Bestandteile aus den Feststoffen auf. Diese werden anschließend in einem Abscheider (9) abgetrennt und das Lösungsmittel wird dem Extraktor erneut zugeführt. Insbesondere wenn zur Selektivitätssteigerung der herauszulösenden Bestandteile als Lösungsmittel Gasgemische mit verringerter Lösungskapazität verwendet werden, werden hohe Gasdurchsätze zur Erzeugung einer bestimmten Produktmenge erforderlich. Zwecks Verringerung der hohen Gasdurchsätze werden die Feststoffe vor Beginn der Kreislaufprozesses mit einem gasförmigen Lösungsmittel unter hohem Druck ohne Gasumwälzung eingeweicht. Sowohl die Lösungsmittelzusammensetzung als auch die Einweichbedingungen können von den Extraktionsbedingungen abweichen.

FIG. 1

## Verfahren zur Extraktion organischer Bestandteile aus Feststoffen

Die Erfindung betrifft ein Verfahren zur Extraktion organischer Bestandteile aus Feststoffen nach den Oberbegriff des Anspruches 1.

Das Verfahren der Hochdruckextraktion ist seit vielen Jahren aus zahlreichen Veröffentlichungen bekannt. Bei der Hochdruckextraktion werden die Lösungsmitteleigenschaften von komprimierten Gasen oder Gasgemischen auf vielfältige Weise genutzt, um Bestandteile aus feststoffartigen Rohstoffen zu lösen und abzutrennen. Die abgetrennten Bestandteile werden entweder als Extrakte gewonnen oder aber der Rohstoff selbst wird durch die Abtrennung veredelt. Technisch realisierte Anwendungen des Verfahrens der Hochdruckextraktion sind beispielsweise die Herstellung von Hopfenextrakten und die Produktion coffeinfreien Kaffees. Als Beispiel sei die DE-OS 33 34 736 genannt, die ein Verfahren zur Herstellung von nikotinarmem Tabak durch Hochdruckextraktion zeigt.

Hochdruckextraktionsanlagen bestehen im einfachsten Fall aus einem Extraktor und einem Abscheider, durch welche das gasförmige Lösungsmittel im Kreis geführt wird. Im Extraktor durchströmt das Gas unter hohem, meist überkritischen Druck den feststoffartigen Rohstoff und belädt sich dabei mit bestimmten organischen Inhaltsstoffen. Je nach den eingestellten Extraktionsbedingungen können diese Inhaltsstoffe selektiv gelöst werden. Die gelösten Bestandteile verlassen den Extraktor zusammen mit dem Lösungsmittelstrom und werden im Abscheider abgetrennt. Die Abscheidung kann durch verschiedene Maßnahmen bewirkt werden, nämlich durch Druck-und Temperaturänderungen, durch Adsorber oderWaschlösungen oder durch Zudosieren von anderen Gasen, welche das Lösungsvermögen des gasförmigen Lösungsmittels reduzieren.

Von diesem Grundverfahren der Hochdruckextraktion sind zahlreiche Varianten entwickelt worden, mit denen der Prozeß bestimmten Aufgabenstellungen angepaßt wird oder wirtschaftlich optimiert wrden kann. Beispiele dafür sind der Einsatz von Gasgemischen zur Erzielung höherer Selektivitäten und der Einsatz mehrerer auf verschiedenen Druckniveaus arbeitenden Abscheideautoklaven zur Herstellung fraktionierter Extrakte.

Allen bekannten Varianten ist gemeinsam, daß der Extraktionsprozeß ausschließlich als Kreislaufprozeß betrieben wird. Sowohl die Extraktoren als auch die Abscheider sind daher während der Extraktion ständig in den Lösungsmittelkreislauf eingeschaltet. Insbesondere Extraktionsprozesse mit hohem Zeitbedarf erfordern deshalb einen hohen Energieaufwand und erhebliche Investitionen für die Pumpenauslegung. Dies gilt insbesondere dann, wenn die Lösungskapazität des Lösungsmittels durch Zugabe von Fremdgasen verringert wird, um die Selektivität zu erhöhen.

Der Erfindung liegt die Aufgabe zugrunde, ein Verfahren der Hochdruckextraktion zu schaffen, welches geringere Gasdurchsätze als bisher gebräuchlich erfordert und neben der hierdurch erreichten besseren Wirtschaftlichkeit qualitativ bessere Extraktionsergebnisse ermöglicht.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Das erfindungsgemäße Verfahren ist besonders für solche Fälle vorteilhaft, bei denen mit Lösungsmittelgemischen gearbeitet wird, um die Selektivität zu verbessern. Dies erfordert in der Regel einen wesentlich erhöhten Lösungsmitteldurchsatz. Die Erfindung ist jedoch nicht auf diese Fälle beschränkt sondern kann auch angewendet werden, wenn das Lösungsmittel aus einer einzigen Komponente besteht. Die Bedingungen in der Einweichphase können identisch sein mit denen der späteren Extraktionsstufe, d.h. es wird das gleiche Lösungsmittel unter gleichen Druck-und Temperaturbedingungen verwendet. Die Bedingungen können jedoch auch unterschiedlich sein, so daß sich insbesondere bei der Verwendung von Lösungsmittelgemischen eine Reihe von Variationsmöglichkeiten ergibt. Diese Abwandlungen des Verfahrens wirken sich insbesondere auf die Selektivität, d.h. also auf die Zusammensetzung der jeweils herausgelösten Bestandteile aus.

Da die Extraktionsphase meist kürzer ist als die Einweichphase, können die verschiedenen Stufen des erfindungsgemäßen Verfahrens in verschiedenen Autoklaven parallel durchgeführt werden. Die Auslegung des Kompressors und der Wärmetauscher muß daher nicht am Gesamtautoklavenvolumen orientiert werden, sondern kann auf das im Kreislauf befindliche Volumen beschränkt werden. Dies bedeutet eine wesentliche Kostenersparnis.

Ein besonders vorteilhaftes Verfahren ergibt sich bei der Verwendung von Lösungsmittelgemischen, wenn man in der Einweichstufe ein Lösungsmittel mit besonders hoher Lösungskapazität verwendet, d.h. beispielsweise wenig verdünntes Kohlendioxid oder sogar reines Kohlendioxid, und in der nachfolgenden Extraktionsstufe ein Lösungsmittelgemisch mit hoher Selektivitätswirkung, d.h. beispielsweise Kohlendioxid mit einem sehr hohen Stickstoffanteil. Wegen der besseren Lösungskapazität wird hierdurch die Einweichzeit deutlich verkürzt. Zum Übergang in den Extraktionsprozeß kann durch Zudosieren einer Komponente, beispielsweise von Stickstoff, das Lösungsmittel für den Kreislaufprozeß direkt aus dem Lösungsmittel der Einweichstufe gebildet werden.

Nicht nur die Zusammensetzung, sondern auch Druck und Temperatur des Lösungsmittels können im Bereich um das Löslichkeitsmaximum des zu extrahierenden Bestandteiles in der Einweichstufe so eingestellt werden, daß sowohl der Einweicheffekt erzielt wird als auch die Nebenbedingung der Selektivität erhalten bleibt. Während der Einweichphase können der Druck und die Temperatur im Autoklaven auch langsam geändert werden.

Schließlich ist es möglich, ein und denselben Feststoff mehrfach hintereinander dem Einweichprozeß und der Hochdruckextraktion zu unterwerfen. Generell ist zu diesen Variationsmöglichkeiten zu sagen, daß der Einweichprozeß eine eigenständige Verfahrensstufe bildet, die in ihren Bedingungen auch eigenständig optimiert werden kann.

Ein Ausführungsbeispiel der Erfindung soll anhand der beigefügten Zeichnungen erläutert werden.

Es zeigen:

Fig. 1 ein vereinfachtes Verfahrensschema mit sechs Autoklaven für die Einweichstufe,

Fig. 2 die Ergebnisse der Reduktion von Nikotin und Aromastoffen aus Tabak mit unterschiedlich zusammengesetzten Gemischen aus Kohlendioxid und Stickstoff,

Fig. 3 die Verkürzung der Einweichzeit bei Verwendung von reinem Kohlendioxid gegenüber einen Gemisch aus Kohlendioxid und Stickstoff.

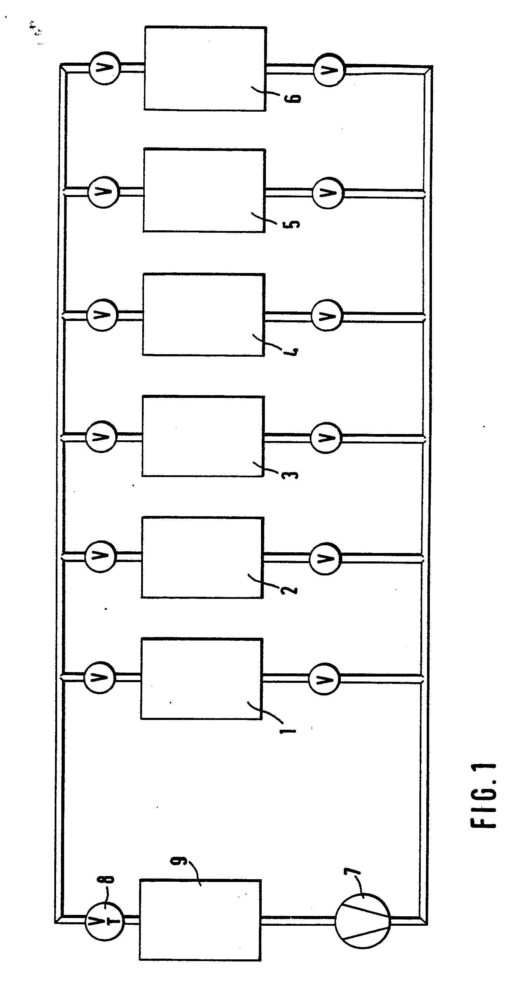

Fig. 1 zeigt in vereinfachter Weise ein Schema zur Durchführung des erfindungsgemäßen Verfahrens. Dargestellt sind sechs Autoklaven (1 bis 6), in welchen der Einweichprozeß durchgeführt wird. Durch Öffnen der im einzelnen nicht bezeichneten Ventile kann jeder Autoklav in den Kreislauf eingeschaltet werden und dient dann als Extraktor. Im dargestellten Fall wird im Autoklaven 3 extrahiert. Das gasförmige Lösungsmittel wird durch den Kompressor 7 auf den Extraktionsdruck verdichtet, durchströmt den Autoklaven 3 und belädt sich dabei mit organischen Bestandteilen aus in diesem befindlichen Feststoffen. Das beladene Lösungsmittel wird durch das Ventil 8 in den Abscheider 9 entspannt, wodurch die Feststoffe abgetrennt werden. Sie können aus dem Abscheider 9 abgezogen werden. Das Lösungsmittel wird dem Kompressor 7 erneut zugeführt. Die Feststoffe in den Autoklaven 1 und 4 bis 6 stehen unterdessen unter Einweichbedingungen. Der Autoklav 2 wird mit neuem Feststoff gefüllt.

Fig. 2 zeigt die Ergebnisse der selektiven Extraktion von Nikotin aus Tabak mit Hilfe von Gasgemischen mit dem aus der DE-OS 33 34 736 bekannten Verfahren. Bei dem bekannten Verfahren wurde beobachtet, daß selbst bei hohen Gasdurchsätzen durch den Extraktionsautoklaven (300 kg Gas/kg Produkt) die Nikotinreduktion ungleichmäßig und nicht überall sicher auf die angestrebten Werte gebracht werden konnte. Durch das erfindungsgemäße Verfahren mit zusätzlicher Einweichstufe konnten diese Schwierigkeiten behoben werden. Während der Einweichstufe befindet sich der Tabak im Autoklaven ohne Gasumwälzung unter Extraktionsbedingungen. Nach der Einweichphase folgt die übliche Extraktionsphase. Die gewünschte Nikotinreduktion ist von der Gesamtlaufzeit beider Stufen abhängig. Das Ergebnis ist eine vollkommen homogene und aromaschonende Entnikotinisierung des Tabaks, die in Fig.2 dargestellt ist. Kurve 10 zeigt die Aromareduktion und Kurve 11 die Nikotinreduktion in Prozent, abhängig von der Gaszusammensetzung, beginnend mit 100% Kohlendioxid bis 100% Stickstoff. Optimale Werte ergeben sich bei einer Zusammensetzung des Lösungsmittels aus 25% Kohlendioxid und 75% Stickstoff. Die Nikotinreduktion ist hierbei nahezu vollständig, während die Aromastoffe zum größten Teil erhalten werden. Dies stellt eine erhebliche Verbesserung gegenüber dem aus der DE-OS 33 34 736 bekannten Verfahren dar.

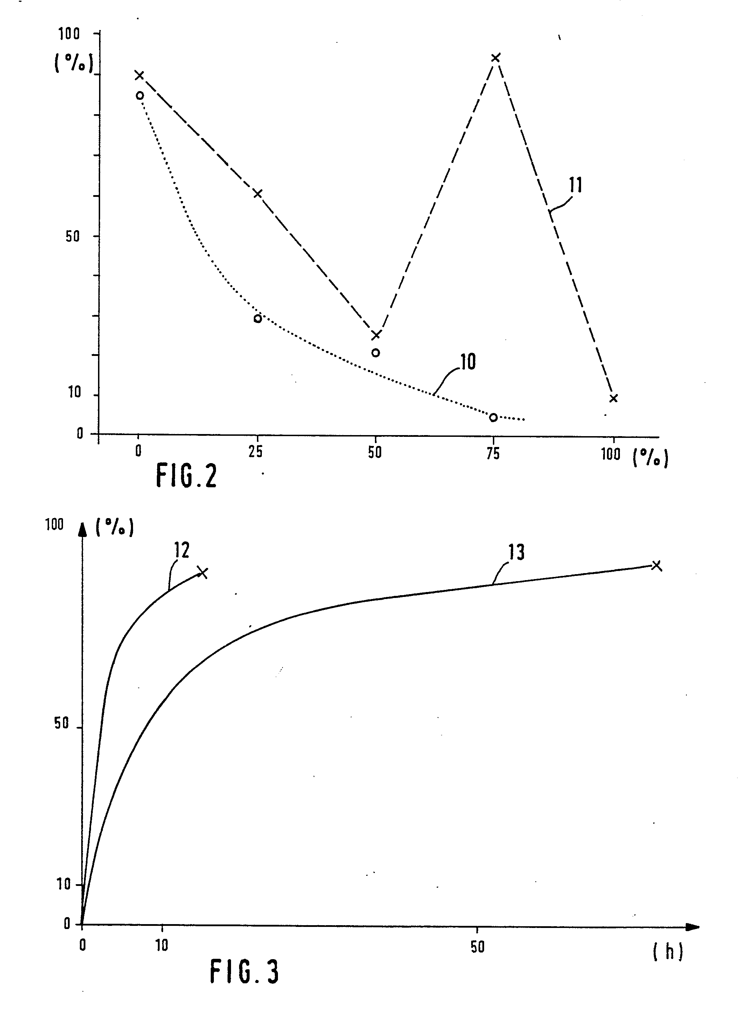

Fig. 3 zeigt, wie durch unterschiedliche Gase in der Einweichstufe bei gleicher Selektivität die Gesamtlaufzeit der Extraktion verringert werden kann. Es ist wiederum die Nikotinreduktion in Prozent angegeben und die Gesamtlaufzeit in Stunden. Kurve 12 zeigt die Gesamtlaufzeit bei Verwendung von reinem Kohlendioxid in der Einweichstufe, Kurve 13 die Gesamtlaufzeit bei der Verwendung eines Gemisches aus 25% Kohlendioxid und 75% Stickstoff bestehenden Gasgemisches in der Einweichstufe.

**Ansprüche**

1. Verfahren zur Extraktion organischer Bestandteile aus Feststoffen, bei dem ein gasförmiges Lösungsmittel unter hohem Druck einen mit dem Feststoff gefüllten Extraktor durchströmt und organische Bestandteile aufnimmt, die in einem nachfolgenden Abscheider (9) abgetrennt werden, wonach das gasförmige Lösungsmittel dem Extraktor erneut zugeführt wird, dadurch gekennzeichnet, daß die Feststoffe vor Beginn des Kreislaufprozesses mit einem gasförmigen Lösungsmittel unter hohem Druck ohne Gasumwälzung eingeweicht werden.

2. Verfahren nach Anspruch 1,
dadurch gekennzeichnet,
daß in der Extraktionsstufe und in der Einweichstufe aus gleichen Komponenten bestehende, jedoch unterschiedlich zusammengesetzte Lösungsmittel verwendet werden.

3. Verfahren nach Anspruch 2,
dadurch gekennzeichnet,
daß nach Beendigung des Einweichens durch Zudosieren einer Komponente das Lösungsmittel für den Kreislaufprozeß gebildet wird.

4. Verfahren nach einem der Ansprüche 1 bis 3,
dadurch gekennzeichnet,
daß während des Einweichens Druck und/oder Temperatur des Lösungsmittels der Einweichstufe verändert werden.

5. Verfahren nach einem der Ansprüche 1 bis 4,
dadurch gekennzeichnet,
daß ein und derselbe Feststoff mehrfach hintereinander dem Einweichprozeß und der Hochdruckextraktion unterworfen wird.

MESSER GRIESHEIM GMBH

0 280 934

MG 1597

EM 1285

FIG.1

FIG.2

FIG.3